# EUROPÄISCHE PATENTSCHRIFT

(11) **EP 3 573 863 B1**
(45) Veröffentlichungstag und Bekanntmachung des Hinweises auf die Patenterteilung: **27.01.2021**
(21) Anmeldenummer: 18713808.6
(22) Anmeldetag: 07.03.2018
(51) Int. Cl.: B61D 17/12, B61D 29/00, B60R 13/02

(54) **DOPPELSTÖCKIGES FAHRZEUG**
TWO-STORY VEHICLE
VÉHICULE À DEUX ÉTAGES

(30) Priorität: 31.03.2017 DE 102017205497
(43) Veröffentlichungstag der Anmeldung: 04.12.2019
(73) Patentinhaber: Siemens Mobility GmbH, 81739 München (DE)
(72) Erfinder: ROHWERDER, Dirk, 45549 Sprockhövel (DE)
(86) Internationale Anmeldenummer: PCT/EP2018/055564
(87) Internationale Veröffentlichungsnummer: WO 2018/177703

(56) Entgegenhaltungen:
- EP-A1- 0 311 771
- DE-A1-102008 039 122
- DE-A1-102014 005 705

## Beschreibung

Die Erfindung bezieht sich auf ein doppelstöckiges Fahrzeug zur Personenbeförderung, mit einem Unterdeck, in dessen Längsrichtung sich deckenseitig ein langgestrecktes Beleuchtungsgehäuse und eine an eine Seitenwand des Fahrzeugs angrenzende Seitendecke erstrecken, wobei das Beleuchtungsgehäuse und die Seitendecke am Fahrzeugrohbau befestigt sind.

Ein solches doppelstöckiges Fahrzeug ist beispielsweise aus der EP 0 311 771 A1 bekannt.

Bei doppelstöckigen Fahrzeugen, wie beispielsweise Schienenfahrzeugen oder Bussen, ergibt sich als Randbedingung für die Auslegung, dass typischer Weise wenig Bauraum für eine Innendecke insbesondere auch des Unterdecks vorhanden ist. Dies hat insbesondere auch Auswirkungen auf die zur Verfügung stehenden Möglichkeiten, ein Beleuchtungsgehäuse und eine Seitendecke innerhalb des Fahrzeugrohbaus zu montieren.

In diesem Zusammenhang ist es bekannt, das Beleuchtungsgehäuse bzw. die Baugruppe "Beleuchtung", die schwere Bauteile umfasst, nahe einem Fenster des Fahrzeugs anzuordnen, während leichte Bauteile einer Innendecke an einer Sandwich-Platte befestigt wurden, die eine Zwischendecke des doppelstöckigen Fahrzeugs bildet. Solche Sandwich-Platten können aus zwei äußeren Deckschichten und einer (Waben-) Kernschicht aufgebaut sein, und sind in ihrer Tragfähigkeit begrenzt. Beispielshalber wird dazu auf die Baureihe RABe 514 der Schweizer Bundesbahnen verwiesen, die im Jahre 2006 den Verkehrsbetrieb aufgenommen hat.

Ausgehend hiervon liegt der Erfindung die Aufgabe zu Grunde, ein Fahrzeug der eingangs genannten Art derart weiter zu entwickeln, dass sich eine bauraumsparende und zuverlässige Anbringung des Beleuchtungsgehäuses und der Seitendecke im Unterdeck des Fahrzeugs erzielen lässt.

Diese Aufgabe wird bei dem doppelstöckigen Fahrzeug dadurch gelöst, dass das Beleuchtungsgehäuse und die Seitendecke in Querrichtung des Fahrzeugs nebeneinander angeordnet und über ein gemeinsam genutztes Befestigungsprofil an einer Unterseite einer Sandwich-Platte befestigt sind, die wenigstens einen Abschnitt einer Zwischendecke zwischen dem Unterdeck und dem Oberdeck des Fahrzeugs bildet, wobei das Befestigungsprofil in Längsrichtung des Fahrzeugs verläuft und einen Hohlraumabschnitt aufweist, der gemeinsam mit einem angrenzenden Abschnitt einer unteren Deckschicht der Sandwich-Platte einen mit Klebstoff befüllten Hohlraum ausbildet.

Diese Merkmale gestatten es bei einem doppelstöckigen Fahrzeug, dass das Beleuchtungsgehäuse (mit darin untergebrachtem Lampenband) in einem Abstand zur Seitenwand des Fahrzeugs angeordnet werden kann, beispielsweise unmittelbar über einem Gangbereich. Zudem wird es ermöglicht, dass sowohl die Seitendecke als auch das Beleuchtungsgehäuse in geeigneter Weise an der Sandwich-Platte montiert werden können. Dazu trägt wesentlich bei, dass eine flächige Klebeverbindung zwischen dem Befestigungsprofil und der unteren Deckschicht der Sandwich-Platte vorgesehen wird.

Der Hohlraumabschnitt des Befestigungsprofils kann mit Kontrollbohrungen ausgestattet sein. Auf diese Weise lässt sich feststellen, ob nach Befüllung der Hohlräume des Befestigungsprofils geeignete Klebeverbindungen zu der unteren Deckschicht der Sandwich-Platte zu Stande gekommen sind.

Das Befestigungsprofil kann zusätzlich über Schraubverbindungen mit der Sandwich-Platte verbunden sein. Dazu ermöglichen diese Schraubverbindungen bedarfsweise eine Vorausrichtung des Befestigungsprofils relativ zu der Sandwich-Platte. Nach zutreffender Ausrichtung des Befestigungsprofils kann dann der Hohlraum des Befestigungsprofils mit Klebstoff befüllt werden. Wenn das Befestigungsprofil als Strangpressprofil vorliegt, ergibt sich ein durchgehender Hohlraum in dessen Ziehrichtung.

Die Schraubverbindungen können in Querrichtung des Fahrzeugs zu beiden Seiten des Hohlraums vorgesehen sein, der von dem Hohlraumabschnitt des Befestigungsprofils und dem angrenzenden Abschnitt der unteren Deckschicht der Sandwich-Platte gebildet wird. Dies ermöglicht eine günstige Verteilung der Kraftübertragung zwischen dem Befestigungsprofil und der Sandwich-Platte, nämlich teilweise über die Schraubverbindungen und teilweise über die Klebeverbindung.

Vorteilhafter Weise können die Schraubverbindungen in Querrichtung des Fahrzeugs zu beiden Seiten des Hohlraums vorgesehen sein. Dies erleichtert eine Vormontage/-ausrichtung des Befestigungsprofils, wonach dann die Befüllung der Hohlräume mit Klebstoff erfolgen kann.

Das Befestigungsprofil zur Anbringung des Beleuchtungsgehäuses kann eine nach unten geöffnete C-Schiene, die auf der der Seitendecke zugewandten Seite des Hohlraums angeordnet ist, und einen der Seitendecke abgewandten, endseitigen Rastabschnitt aufweisen. Insofern ist es möglich, zunächst mit Hilfe des Rastabschnitts eine einseitige Anbringung des Beleuchtungsgehäuses zu bewirken, wonach an der C-Schiene eine geeignete Schraubverbindung zwischen dem Beleuchtungsgehäuse und dem Befestigungsprofil realisiert wird. Es ergibt sich eine zuverlässige Anbringung des Beleuchtungsgehäuses an der Sandwich-Platte, und zwar über das in Längsrichtung des Fahrzeugs verlaufenden Befestigungsprofil.

Die Seitendecke kann einen inneren, im Wesentlichen horizontal verlaufenden Haltesteg aufweisen, der an dem Befestigungsprofil angebracht ist. Hier ist es möglich, dass der Haltesteg über eine Schraubverbindung (Vierteldrehverschluss) an dem Befestigungsprofil montiert ist.

Die Seitendecke ist typischer Weise aus glasfaserverstärktem Kunststoff gebildet, während das Befestigungsprofil aus stranggepresstem Aluminium hergestellt sein kann. Die Deckschicht der Sandwich-Platte ist typischer Weise ein Aluminiumblech.

Das Befestigungsprofil kann sich über eine gesamte Länge des Fahrzeug(wagen)s erstrecken oder auch aus mehreren, miteinander fluchtenden Einzelprofilen aufgebaut sein.

Ein Ausführungsbeispiel der Erfindung wird nachfolgend unter Bezugnahme auf die Zeichnung noch näher erläutert. Es zeigen:
- Figur 1: eine schematische Ansicht von unten auf einen Zwischendeckenabschnitt eines doppelstöckigen Schienenfahrzeugs und
- Figur 2: eine Querschnittsansicht gemäß Ebene II-II des Zwischendeckenabschnitts von Fig. 1.

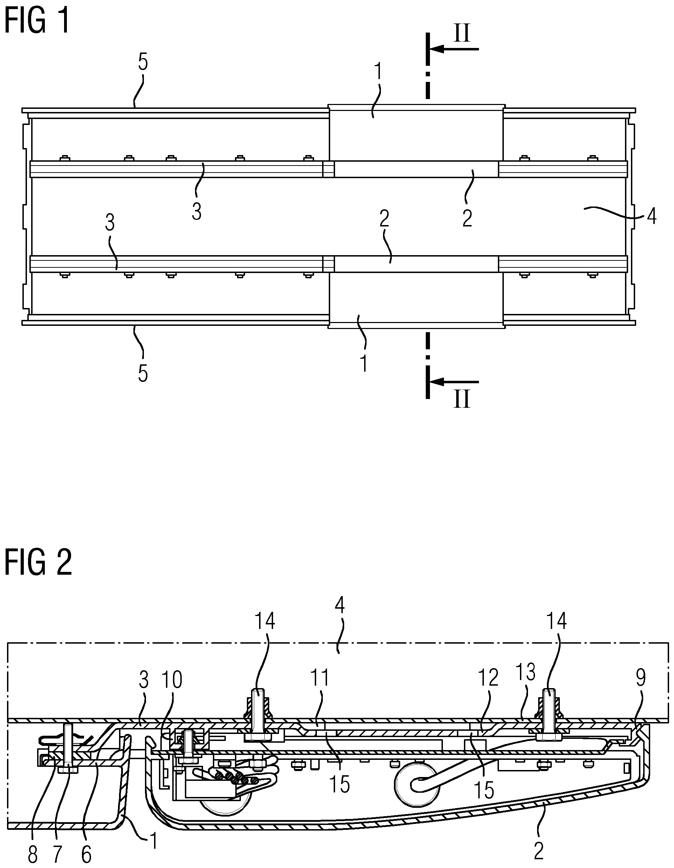

Figur 1 zeigt eine Zwischendecke eines doppelstöckigen Schienenfahrzeugs in einer Ansicht von unten. In Figur 1 sind zu beiden Seiten des Schienenfahrzeugs jeweils eine Seitendecke 1 aus Glasfaser verstärktem Kunststoff und ein Beleuchtungsgehäuse 2 angeordnet. Sowohl die Seitendecken 1 als auch die Beleuchtungsgehäuse 2 sind über sich in Längsrichtung des Schienenfahrzeugs erstreckende Befestigungsprofile 3 aus Aluminium an einer Unterseite einer Sandwich-Platte 4 angebracht. In dem in Figur 1 gezeigten Beispiel ist nur ein Längsabschnitt der Sandwich-Platte 4 mit Seitendecken 1 und Beleuchtungsgehäusen 2 bestückt.

Eine Anbringung der Seitendecke 1 und des Beleuchtungsgehäuses 2 an der Sandwich-Platte 4 geht mehr im Detail aus Figur 2 hervor. Die bis zu einer Seitenwand 5 reichende Seitendecke 1 macht zu seiner Anbringung an der Sandwich-Platte 4 gemeinsam Gebrauch von dem Befestigungsprofil 3, das sich in Längsrichtung des Schienenfahrzeugs erstreckt. Im Bereich der Seitendecke 1 weist diese einen im Wesentlichen horizontal in Richtung Seitenwand 5 verlaufenden Haltesteg 6 auf, der über einen Vierteldrehverschluss 7 unter Zwischenlage von Filz 8 an dem zugeordneten Ende des Befestigungsprofils 3 angebracht ist. Zur Betätigung des Vierteldrehverschlusses 7 ist die Seitendecke 1 passend gelocht.

In Querrichtung des Schienenfahrzeugs schließt sich an die Seitendecke 1 in geringem Abstand das Beleuchtungsgehäuse 2 an, in dem Leuchtmittel untergebracht sind. Zur Befestigung des Beleuchtungsgehäuses 2 an dem Befestigungsprofil 3 dient zum einen ein Rastabschnitt 9 des Befestigungsprofils 3, und zwar an dessen der Seitendecke 1 gegenüberliegendem Ende in Querrichtung des Schienenfahrzeugs. Der Rastabschnitt 9 steht im Eingriff mit einem Vorsprung des Beleuchtungsgehäuses 2.

Des Weiteren ist das Beleuchtungsgehäuse 2 mittels einer Schraubverbindung (Nutenstein) an einer nach unten offenen C-Schiene 10 des Befestigungsprofils 3 angebracht.

Bevor jedoch die Seitendecke 1 und das Beleuchtungsgehäuse 2 an der Befestigungsschiene 3 montiert werden, sollte zunächst die Befestigungsschiene 3 an der Sandwich-Platte 4 angebracht werden. Dazu dient ein in Längsrichtung des Schienenfahrzeugs verlaufender Hohlraum 11, der zwischen einem rinnenförmigen Hohlraumabschnitt 12 des Befestigungsprofils 3 und einem zugeordneten, ebenen Abschnitt 13 einer unteren Deckschicht der Sandwich-Platte 4 ausgebildet ist.

Zunächst wird das Befestigungsprofil 3 gegenüber der Sandwich-Platte 4 geeignet ausgerichtet und mittels Fixierschrauben 14, welche die untere Deckschicht der Sandwich-Platte 4 durchstoßen und in sie hineinragen, positioniert und fixiert. Die Fixierschrauben sind in Querrichtung des Schienenfahrzeugs zu beiden Seiten des Hohlraums 11 angeordnet. Sodann wird der Hohlraum 11 mit Klebstoff befüllt, so dass eine flächige Kraftübertragung zwischen dem Befestigungsprofil 3 und der Sandwich-Platte 4 erfolgen kann. Die Qualität der sich ergebenden Klebeverbindung nach Befüllung des Hohlraums 11 mit Klebstoff lässt sich mit Hilfe von Kontrollbohrungen 15 in dem Hohlraumabschnitt 12 des Befestigungsprofils 3 feststellen.

## Patentansprüche

1. Doppelstöckiges Fahrzeug zur Personenbeförderung mit einem Unterdeck, in dessen Längsrichtung sich deckenseitig ein langgestrecktes Beleuchtungsgehäuse (2) und eine an eine Seitenwand (5) des Fahrzeugs angrenzende Seitendecke (1) erstrecken, wobei das Beleuchtungsgehäuse (2) und die Seitendecke (1) am Fahrzeugrohbau befestigt sind,
**dadurch gekennzeichnet, dass**
das Beleuchtungsgehäuse (2) und die Seitendecke (1) in Querrichtung des Fahrzeugs nebeneinander angeordnet und über ein gemeinsam genutztes Befestigungsprofil (3) an einer Unterseite einer Sandwich-Platte (4) befestigt sind, die wenigstens einen Abschnitt einer Zwischendecke zwischen dem Unterdeck und dem Oberdeck des Fahrzeugs bildet, wobei das Befestigungsprofil (3) in Längsrichtung des Fahrzeugs verläuft und einen Hohlraumabschnitt (12) aufweist, der gemeinsam mit einem angrenzenden Abschnitt (13) einer unteren Deckschicht der Sandwich-Platte (4) einen mit Klebstoff befüllten Hohlraum (11) ausbildet.

2. Fahrzeug nach Anspruch 1,
**dadurch gekennzeichnet, dass**
der Hohlraumabschnitt (12) des Befestigungsprofils (3) mit Kontrollbohrungen (15) ausgestattet ist.

3. Fahrzeug nach einem der Ansprüche 1 oder 2,
**dadurch gekennzeichnet, dass**
das Befestigungsprofil (3) zusätzlich über Schraubverbindungen (14) mit der Sandwich-Platte (4) verbunden ist.

4. Fahrzeug nach Anspruch 3,
**dadurch gekennzeichnet, dass**
die Schraubverbindungen (14) in Querrichtung des Fahrzeugs zu beiden Seiten des Hohlraums (11) vorgesehen sind.

5. Fahrzeug nach einem der Ansprüche 1 bis 4,
**dadurch gekennzeichnet, dass**
das Befestigungsprofil (3) zur Anbringung des Beleuchtungsgehäuses (2) eine nach unten geöffnete C-Schiene (10), die auf der der Seitendecke (1) zugewandten Seite des Hohlraums (11) angeordnet ist, und einen der Seitendecke (10) abgewandten, endseitigen Rastabschnitt (9) aufweist.

6. Fahrzeug nach einem der Ansprüche 1 bis 5,
**dadurch gekennzeichnet, dass**
die Seitendecke (1) einen inneren, im Wesentlichen horizontal verlaufenden Haltesteg (6) aufweist, der an dem Befestigungsprofil (3) angebracht ist.

## Claims

1. Double-deck vehicle for passenger transport with a lower deck, in the longitudinal direction of which an elongate illumination housing (2) and a side ceiling (1) which adjoins a side wall (5) of the vehicle extend on the ceiling side, the illumination housing (2) and the side ceiling (1) being fastened to the vehicle shell, **characterized in that** the illumination housing (2) and the side ceiling (1) are arranged next to one another in the transverse direction of the vehicle, and are fastened to an underside of a sandwich panel (4) via a jointly used fastening profile (3), which sandwich panel (4) forms at least one section of an intermediate ceiling between the lower deck and the upper deck of the vehicle, the fastening profile (3) running in the longitudinal direction of the vehicle and having a cavity section (12) which, together with an adjoining section (13) of a lower covering layer of the sandwich panel (4), configures a cavity (11) which is filled with adhesive.

2. Vehicle according to Claim 1, **characterized in that** the cavity section (12) of the fastening profile (3) is equipped with inspection bores (15).

3. Vehicle according to either of Claims 1 and 2, **characterized in that** the fastening profile (3) is additionally connected to the sandwich panel (4) via screw connections (14).

4. Vehicle according to Claim 3, **characterized in that** the screw connections (14) are provided in the transverse direction of the vehicle on both sides of the cavity (11).

5. Vehicle according to one of Claims 1 to 4, **characterized in that**, in order to attach the illumination housing (2), the fastening profile (3) has a C-shaped rail (10) which is open towards the bottom and is arranged on that side of the cavity (11) which faces the side ceiling (1), and an end-side latching section (9) which faces away from the side ceiling (10).

6. Vehicle according to one of Claims 1 to 5, **characterized in that** the side ceiling (1) has an inner, substantially horizontally running holding web (6) which is attached to the fastening profile (3).

## Revendications

1. Véhicule à deux étages pour le transport de passagers, comprenant un pont inférieur, dans la direction longitudinale duquel s'étendent, du côté de couverture, un boîtier (2) d'éclairage s'étendant en longueur et une couverture (1) latérale voisine d'une paroi (5) latérale du véhicule, le boîtier (2) d'éclairage et la couverture (1) latérale étant fixés à la caisse du véhicule,
**caractérisé en ce que**
le boîtier (2) d'éclairage et la couverture (1) latérale sont disposés l'un à côté de l'autre dans la direction transversale du véhicule et sont fixés, par l'intermédiaire d'un profilé (3) de fixation utilisé en commun, à un côté inférieur d'une plaque (4) sandwich, qui forme au moins une partie d'une couverture intermédiaire entre le pont inférieur et le pont supérieur, le profilé (3) de fixation s'étendant dans la direction longitudinale du véhicule et ayant une partie (12) d'espace creux, qui constitue, conjointement avec une partie (13) voisine d'une couche de revêtement inférieure de la plaque (4) sandwich, un espace (11) creux empli de colle.

2. Véhicule suivant la revendication 1,
**caractérisé en ce que**
la partie (12) d'espace creux du profilé (3) de fixation est équipée de trous (15) de contrôle.

3. Véhicule suivant l'une des revendications 1 ou 2,
**caractérisé en ce que**
le profilé (1) de fixation est relié à la plaque (4) sandwich supplémentairement par des vissages (14).

4. Véhicule suivant la revendication 3,
**caractérisé en ce que**
les vissages (14) sont prévus dans la direction transversale du véhicule, des deux côtés de l'espace (11) creux.

5. Véhicule suivant l'une des revendications 1 à 4,
**caractérisé en ce que**
le profilé (3) de fixation a, pour le montage du boîtier (2) d'éclairage, un rail (10) en C ouvert vers le bas, qui est disposé du côté, tourné vers la couverture (1) latérale, de l'espace (11) creux, et a une partie (9) d'encliquetage, du côté de l'extrémité, loin de la couverture (10) latérale.

6. Véhicule suivant l'une des revendications 1 à 5,
**caractérisé en ce que**
la couverture (1) intermédiaire a une entretoise (6) intérieure de maintien, qui s'étend sensiblement horizontalement et qui est montée sur le profilé (3) de fixation.
